# EUROPÄISCHE PATENTSCHRIFT

(11) **EP 4 142 462 B1**
(45) Veröffentlichungstag und Bekanntmachung des Hinweises auf die Patenterteilung: **24.04.2024**
(21) Anmeldenummer: 21725966.2
(22) Anmeldetag: 27.04.2021
(51) Int. Cl.: A01B 9/00, A01B 13/08, A01B 15/10, A01B 5/14

(54) **PFLUGMODUL UND PFLÜGVORRICHTUNG MIT MINDESTENS EINEM PFLUGMODUL**
PLOW MODULE AND PLOW DEVICE WITH AT LEAST ONE PLOW MODULE
MODULE DE CHARRUE ET DISPOSITIF DE CHARRUE AVEC AU MOINS UN MODULE DE CHARRUE

(30) Priorität: 29.04.2020 DE 102020205428
(43) Veröffentlichungstag der Anmeldung: 08.03.2023
(73) Patentinhaber: Huber Soil Solution GmbH, 8435 Wagna (AT)
(72) Erfinder: HUBER, Franz-Ferdinand, 8430 Wagna (AT)
(74) Vertreter: Leske, Thomas
(86) Internationale Anmeldenummer: PCT/EP2021/060937
(87) Internationale Veröffentlichungsnummer: WO 2021/219607

(56) Entgegenhaltungen:
- EP-A1- 0 820 687
- WO-A1-2020/193537
- DE-A1-102017 102 683
- FR-A1- 2 978 325

## Beschreibung

Die vorliegende Erfindung betrifft ein Pflugmodul mit Pflugnachlaufstabilisierung zur auswechselbaren Montage an einem Grundgerüst einer Pflügvorrichtung zum Pflügen eines Bodens gemäß Oberbegriff des Anspruchs 1 sowie gemäß Anspruch 14 eine Pflügvorrichtung, die mit zumindest einem derartigen Pflugmodul ausgerüstet ist.

Beim Pflügen mit einer derartigen Pflügvorrichtung, die üblicherweise von einem Traktor gezogen wird, werden aus dem Boden sogenannte Erdbalken herausgeschnitten. Ein Erdbalken weist einen Seitenbereich auf, entlang welchem ein erstes Schneidelement schneidet bzw. geschnitten hat. Ferner weist der Erdbalken einen Bodenbereich auf, welcher die beiden Seitenbereiche verbindet und mittels eines zweiten Schneidelements von dem Boden getrennt wird. Entsprechend weist der Boden an dem Bodenbereich des Erdbalkens eine Trennfläche auf (sog. Furchensohle). Aus dem Boden wird ein ungefähr rechteckiger Erdbalken herausgeschnitten, wobei eine horizontale Schnittebene (=Furchensohle) mittels des zweiten Schneidelements und eine vertikale Schnittebene (=Furchenwand) mittels des ersten Schneidelements an dem Restboden entsteht. Durch das Herausschneiden des Erdbalkens wird im Boden eine Furchenwand gebildet, von welcher der Seitenbereich des Erdbalkens gelöst wurde. Der Bodenbereich definiert somit zum Zeitpunkt des Trennens von dem Boden die vertikal unterste Fläche des Erdbalkens.

Es wird darauf hingewiesen, dass die Begriffe "horizontal" und "vertikal" sowie "oben" und "unten" sich auf Anordnungen und Ausbildungen der Pflügvorrichtungen und damit des an diesen befestigten erfindungsgemäßen Pflugmoduls beziehen, wobei die Pflügvorrichtung bestimmungsgemäß auf dem Boden aufliegend und im Pflügbetrieb entlang der Bearbeitungsrichtung bewegbar betrachtet wird.

Eine einschlägige Pflügvorrichtung ist aus DE 10 2017 102 683 A1 bekannt. Am Grundgerüst dieser Pflügvorrichtung ist ein rotierbares, als Schneidteller ausgebildetes erstes Schneidelement mit einer umlaufenden ersten Schneidkante angeordnet, wobei das erste Schneidelement derart ausgebildet ist, dass durch Bewegen der Pflügvorrichtung auf dem Boden entlang einer Pflügrichtung ein Seitenbereich eines Erdbalkens des Bodens abschneidbar ist. Die Pflügrichtung oder Bearbeitungsrichtung ist definiert als die Richtung, entlang welcher die Pflügvorrichtung über dem Boden verfahren wird. Ein zweites, ebenes Schneidelement mit einer zweiten Schneidkante ist ebenfalls am Grundgerüst befestigt und ist in Pflügrichtung vor dem ersten Schneidelement angeordnet. Das zweite Schneidelement ist derart ausgebildet ist, dass durch Bewegen des Pflugmoduls auf dem Boden entlang einer Pflügrichtung der Bodenbereich des Erdbalkens abschneidbar ist. Beim Pflügen mit dieser Pflügvorrichtung wird zunächst der Bodenbereich eines zu bildenden Erdbalkens mittels des zweiten Schneidelements geschnitten. Das nachfolgende erste Schneidelement, das als bombierter Schneidteller ausgebildet ist, schneidet anschließend einen Seitenbereich des Erdbalkens und legt diesen gewendet in der gebildeten Furche ab. Eine derartige Pflügvorrichtung erfordert gegenüber konventionellen Pflügen mit Pflugkörpern und Streichblechen eine deutlich verringerte Zugkraft.

Von Nachteil bei einer Pflügvorrichtung gemäß DE 10 2017 102 683 A1 ist, dass die verschiedenen Schneidelemente einzeln am Grundgerüst montiert sind, was eine Montage oder Nachrüstung an einem konventionellen Grundgerüst für Pflüge schwierig macht. Zudem ist die räumliche Ausrichtung der beiden Schneidelemente zueinander kompliziert und deren Einstellung bzw. Verstellung oft nur in geringem Umfang möglich.

In EP 0 820 687 A1 ist ein Pflug beschrieben, welcher als Scharpflug ausgebildet ist und zusätzlich zu den fest am Pflugbaum und beidseitig davon angeordneten Pflugscharen Pflugscheiben aufweist, welche von einer Seite des Pflugbaumes zur gegenüberliegenden Seite relativ zum Pflugbaum schwenkbar sind, sodass beim Pflügen in der einen Richtung zunächst die unteren Pflugschare und die Pflugscheiben im Einsatz sind, wohingegen beim Pflügen in der entgegengesetzten Richtung die Pflugscheiben zu den gegenüberliegenden Pflugscharen geschwenkt und der Pflugbaum so geschwenkt wird, dass dann diese Pflugschare mit den geschwenkten Pflugscheiben im Einsatz sind. Prinzipiell handelt es sich dabei um einen Pflug mit herkömmlichen Pflugscharen, bei welchem die Doppelanordnung der Pflugschare und die Einzelanordnung der Scheiben unabhängig voneinander als jeweils eigenständige Pflugelemente mit dem Pflugbaum separat jeweils verbunden sind. Die Pflugschare stellen die Elemente dar, mit welchen der Boden aufgebrochen wird, wobei mittels der Pflugscheiben zusätzlich die Seitenwand der Furche geschnitten und der Boden gewendet wird. Mit einer derartigen bekannten Anordnung von Pflugscharen und dazu jeweils nachgeordneten Pflugscheiben ist ein Ausbalancieren der Querkräfte nicht gewährleistet.

In DE 203 04 036 U1 ist eine Vorrichtung zur Bearbeitung von Hopfenkulturen beschrieben. Die Vorrichtung ist zur Anlenkung an einen Schlepper vorgesehen und weist einen Grundrahmen auf, an welchem zumindest zwei Arbeitsgeräte befestigt sind. Ein erstes Arbeitsgerät ist ein Bifang-Abtraggerät zum Abtragen eines Bifangs zur Freilegung der Rebenstrünke von Hopfenwurzelstöcken im Bifang, wohingegen ein zweites Arbeitsgerät in Form eines Schneidgerätes zum Abschneiden der freigelegten Rebenstrünke der Hopfenwurzelstöcke vorgesehen ist. Am Grundrahmen ist ein Auslegerarm vorgesehen, an welchem über jeweilige Lenker die jeweiligen Arbeitsgeräte befestigt sind. Beide Arbeitsgeräte sind hintereinander angeordnet und ermöglichen, dass die Bearbeitung des Bifangs zur Freilegung der Rebenstrünke und das anschließende Abschneiden derselben in einem Arbeitsgang durchführbar sind. Pflügen ist mit dieser bekannten Vorrichtung zur Bearbeitung von Hopfenkulturen nicht möglich.

Das Pflugmodul gemäß nicht vorveröffentlichter DE 10 2019 204 256 A1 desselben Anmelders arbeitet nach dem Prinzip, dass ein Schneidelement von der Furchenwand aus den abzutrennenden und zu wendenden Erdbalken unterschneidet und mit der Hohlscheibe dann wendet, was insgesamt schon recht gut funktioniert. Es hat sich aber bei diesem bekannten Pflug gezeigt, dass es keinen ausbalancierten Nachlauf des Pflugmoduls gibt. Das bedeutet, dass im praktischen Einsatz der gewöhnlich mehrere Pflugmodule aufweisende Pflug beim Pflügen auch durch die Inhomogenität des Erdflusses seitlich ausbrechen kann. Bodenverdichtungen und Bodenzusammensetzungen sind häufig stark variierend, wodurch sich die Schnittbreite und Schnitttiefe der voranlaufenden ersten Hohlscheibe stark verändern. Dies führt dazu, dass die Querkräfte in eine Richtung größer werden als in die entgegengesetzte Richtung, wodurch der Pflug seine Führung verliert. Das bedeutet, dass der Pflug die Tendenz zeigt, sich querzustellen, aus der als neutrale Zuglinie geltenden Furche auszubrechen. Diese dabei auf den Pflug und die Pflugmodule wirkenden Kräfte führen zu einer hohen Beanspruchung der Lager der Hohlscheibe.

Der Einsatz eines ebenfalls bekannten Streichblechpfluges führt zwar zu einer besseren Beherrschung des Nachlaufes, weil sich der eigentliche Pflugkörper mit einer relativ großen Pfluganlage gegen die Furchenwand stemmt, wodurch der Nachlauf, d.h. das Laufen des Pfluges auf der neutralen Zuglinie, sich stabilisiert. Dies muss aber mit einem wesentlich höheren Zugkraftaufwand beim Ziehen des Pfluges durch den Boden erkauft werden.

Die Aufgabe der vorliegenden Erfindung besteht nun darin, einen Pflug bekannter Bauart in Modulbauweise so zu modifizieren, dass die Querkräfte ausbalanciert werden, der Pflug im Geradeauslauf, d.h. in einem geraden Nachlauf, gehalten werden kann, sodass der Pflugnachlauf insgesamt stabilisiert werden kann.

Diese Aufgabe wird mit einem Pflugmodul mit den Merkmalen gemäß Anspruch 1 und mit einer Pflügvorrichtung mit den Merkmalen gemäß Anspruch 14 gelöst. Zweckmäßige Weiterbildungen sind in den abhängigen Ansprüchen definiert.

Diese Aufgabe wird für ein Pflugmodul als fertigmontierte Baueinheit und für eine Pflügvorrichtung mit einem derartigen Pflugmodul gelöst, indem das zweite Schneidelement als feststehendes Schneidmesser ausgebildet ist und derart nach hinten, d.h. entgegen der Pflügrichtung, abgewinkelt ist, dass ein dynamisches Kräftegleichgewicht zwischen dem ersten Schneidelement und dem Schneidmesser im Sinne einer Pflügrichtungsstabilisierung erzielbar ist. Das Pflugmodul weist üblicherweise eine erste Trägerstruktur, an der das erste Schneidelement angeordnet ist, und eine zweite Trägerstruktur, an der das zweite Schneidelement angeordnet ist, auf. Die zweite Trägerstruktur ist mit der ersten Trägerstruktur verbunden, wobei die erste Trägerstruktur Mittel zur lösbaren Befestigung an einem Grundgerüst einer Pflügvorrichtung aufweist, welche zumindest ein Pflugmodul aufweist. Bei dem Pflugmodul ist das zweite Schneidelement in Pflügrichtung nach dem ersten Schneidelement angeordnet, weist neben zumindest einem, vorzugsweise zwei Pflugmodulen der erfindungsgemäßen Pflügvorrichtung zusätzlich ein Anlageblech auf, welches sich an der Furchenwand abstützt und damit die Pflügvorrichtung insgesamt wie auch das jeweilige Pflugmodul, ihre Nachlauflinie stabilisierend, abstützt.

Gemäß einem ersten Aspekt der vorliegenden Erfindung wird das Pflugmodul für eine Pflügvorrichtung zum Pflügen eines Bodens beschrieben. Das Pflugmodul weist eine erste Trägerstruktur auf, an der ein rotierbares Schneidelement, z. B. eine bombierte Scheibe angeordnet ist. Ein zweites Schneidelement, z. B. ein in einem definierten Winkel angeordnetes Schneidmesser, ist auf einer zweiten Trägerstruktur montiert, die ihrerseits fest mit der ersten Trägerstruktur verbunden ist. Das rotierbare erste Schneidelement weist eine umlaufende erste Schneidkante auf und ist derart ausgebildet, dass bei Bewegen der Pflügvorrichtung mit der Trägerstruktur auf dem Boden entlang von deren Pflügrichtung, d. h. der Bearbeitungsrichtung, ein Seitenbereich eines Erdbalkens des Bodens, insbesondere von einer Furchenwand, mittels eines ersten Schneidbereichs der ersten Schneidkante abgeschnitten wird. Die erste und die zweite Trägerstruktur sind fest miteinander verbunden und sind gemeinsam an der Grundstruktur der Pflügvorrichtung angeordnet. Das zweite Schneidelement weist eine zweite Schneidkante auf, wobei das zweite Schneidelement an der zweiten Trägerstruktur angeordnet ist und derart ausgebildet ist, dass bei Bewegen des Pflugmoduls auf dem Boden entlang der Pflügrichtung ein Bodenbereich eines Erdbalkens des Bodens, insbesondere entlang einer Trennfläche zwischen Erdbalken und Pflügsohle, mittels eines zweiten Schneidbereichs der zweiten Schneidkante abschneidbar ist. Das zweite Schneidelement ist relativ zu dem ersten Schneidelement in Pflügrichtung derart angeordnet, dass der zweite Schneidbereich in Pflügrichtung hinter dem ersten Schneidbereich liegt.

Vorzugsweise sind die jeweiligen Schneidelemente an dem Pflugmodul bezüglich ihrer Position zueinander verstellbar, vorzugsweise schwenkbar. Dies stellt einen deutlichen Vorteil dar. So kann beispielsweise ein Pflugmodul verwendet werden, bei welchem das erste Schneidelement für die Seitentrennung des Erdbalkens vor dem zweiten Schneidelement für die Bodentrennung des Erdbalkens angeordnet sein.

Vorzugsweise weist eine Pflügvorrichtung mehrere Pflugmodule auf, beispielsweise drei bis sechs Module auf einer Pflugseite, d. h. bezogen auf ein Grundgerüst sechs bis 16 Module insgesamt. Gegenüber den bekannten Pflügvorrichtungen, bei welchen das erste Schneidelement zum Schneiden der Seite eines Erdbalkens hinter dem zweiten Schneidelement angeordnet ist, welches den Boden eines Erdbalkens bzw. einer Furche, aus welchem der Erdbalken geschnitten wird, schneidet. Diese bekannte Anordnung ist offensichtlich gewählt worden, weil das erste Schneidelement im Zusammenwirken beispielsweise mit einem Leitblech oder in einer Ausgestaltung als Hohlscheibe für das Wenden des herausgeschnittenen Erdbalkens zuständig ist. Dazu muss die Sohle einer Furche, d. h. die untere Seite eines Erdbalkens bereits geschnitten sein. Daher wurde bei den bekannten Einrichtungen das zweite Schneidelement bezüglich seiner aktiven Schneide vor dem ersten Schneidelement angeordnet. Durch diese Anordnung kann das erste Schneidelement nach seinem Schneiden der Seitenwand des Erdbalkens diesen unmittelbar wenden, da die Furchensohle ja bereits geschnitten ist. Damit das erste Schneidelement zuverlässig die Seite schneiden kann oder in einer gekrümmten Ausbildung auch den Erdbalken zum Wenden vorbereiten und das Wenden initiieren kann, muss natürlich der Antrieb bzw. die Lagerung bzw. die Halterung des ersten Schneidelementes auf dessen Rückseite vorgesehen sein. Das wiederum bedeutet aber, dass das zweite Schneidelement das erste Schneidelement jeweils gesonderte Träger aufweisen müssen, mittels welcher sie an dem Gerüst angebracht sind. Damit wird eine Einstellung der beiden Schneidelemente zueinander erheblich erschwert.

Demgegenüber ist bei der vorliegenden Erfindung das erste Schneidelement, welches die Seite des Erdbalkens schneidet, vor dem zweiten Schneidelement angeordnet, welches die Bodenfläche des Erdbalkens bzw. der Furche schneidet. Normalerweise wird dies nicht in Betracht gezogen, weil bei einer Pflügvorrichtung, bei welcher in Zugrichtung zuerst das erste Schneidelement zum Schneiden der Seite des Erdbalkens angeordnet ist, nicht auch noch die Funktion des Wendens ausführen kann, obwohl die Form als Hohlscheibe ausgebildet ist und prinzipiell zum Wenden des Erdbalkens vorgesehen ist. Denn der Furchenboden wurde ja noch nicht geschnitten. Darin besteht gerade der Vorteil des erfindungsgemäßen Moduls, dass nur zwei Schneidelemente, ohne dass ein Leitblech oder Streichblech erforderlich ist, vorgesehen sein müssen. Der Vorteil gemäß der Erfindung besteht nun auch darin, dass aufgrund der Tatsache, dass das erste Schneidelement an seiner Rückseite den Antrieb bzw. die Lagerung bzw. die Trägerstruktur aufweist und bei einer Anordnung vor dem zweiten Schneidelement, welches eine Trägerstruktur ebenfalls aufweist, die beiden Trägerstrukturen von dem ersten Schneidelement und von dem zweiten Schneidelement miteinander verbunden werden können, so dass ein Modul entsteht, welches mit einer einzigen Aufhängung am Trägergerüst der Pflügvorrichtung angebracht werden kann. Der entscheidende Vorteil besteht darin, dass eine herkömmliche Pflügvorrichtung mit Pflugkörpern umgebaut werden kann, und zwar ohne größeren Aufwand, indem die Pflugkörper demontiert und ein entsprechendes Modul montiert werden. Selbstverständlich können die herkömmlichen Grundgerüste, Pflugbäume auch genannt, gleich werksseitig mit den erfindungsgemäßen Pflugmodulen versehen werden.

In überraschender Weise hat sich nun gezeigt, dass bei einer Pflügvorrichtung mit vorlaufendem Schneidelement als Hohlscheibe ein Schneiden des Seitenbereiches möglich ist, ohne dass zunächst ein Wenden sich anschließt, da der Furchenboden noch nicht geschnitten ist. Dies erledigt erst das nachlaufende zweite Schneidelement. Wenn bei einer Pflügvorrichtung mehrere derartige Module hintereinander angeordnet sind, so hat sich gezeigt, dass schon beim, in Pflügrichtung gesehen, ersten Modul folgenden zweiten Modul das erste Schneidelement nicht nur die dort vorhandene Seitenfläche des Erdbalkens schneidet, sondern dass dort bereits durch das erste Modul die Bodenfurche geschnitten ist. Damit kann vom zweiten Modul die gewünschte Funktion unmittelbar ausgeübt werden, nämlich dass das erste Schneidelement in Form einer Hohlscheibe die Seitenfläche des Erdbalkens schneidet und gleichzeitig den Erdbalken wenden kann.

Hinsichtlich der Konstruktion kann davon profitiert werden, dass die Halterung bzw. Trägerstruktur des ersten Schneidelementes nach hinten auf die Trägerstruktur für das zweite Schneidelement weist, so dass dort ein leichtes Anbringen und Verbinden der beiden Schneidelemente zu einem Modul möglich ist. Wenn die Pflügvorrichtung beispielsweise nur ein Pflugmodul aufweist, dann wäre beim allerersten Zug beim Pflügen eines Feldes lediglich dieser allererste Zug ein Zug, bei dem die Seite des noch nicht freigeschnittenen Erdbalkens geschnitten wird, sodass nur ein teilweises Wenden stattfindet. Aber bereits beim zweiten Zug würde unmittelbar ein vollständiges Wenden des seitlich dann abgeschnittenen Erdbalkens mittels des ersten Schneidelementes erfolgen, da das zweite Schneidelement dort in dem Bereich bereits die Furchensohle und damit die Unterseite des Erdbalkens abgeschnitten hätte. Es ergeben sich damit erhebliche Vorteile gegenüber den herkömmlichen Pflügvorrichtungen. Ein Auswechseln oder Umrüsten herkömmlicher Pflügvorrichtungen mit Pflugkörpern auf die erfindungsgemäßen Pflugmodule ist ohne Weiteres möglich. Es ist ohne Weiteres auch möglich, aufgrund der Modularität rasch Defekte oder wegen einer veränderten Bodenstruktur entsprechend angepasste andere Pflugmodule an der Pflügvorrichtung auszuwechseln.

Da im praktischen Einsatz der Pflug durch die Inhomogenität des Erdflusses, d.h. durch unterschiedliche Bodenverdichtungen und Bodenzusammensetzungen, seitlich "ausbrechen" kann, folgt er also nicht der idealen Nachlauflinie. Dadurch können Schnittbreite und Schnitttiefe, insbesondere der ersten Hohlscheibe, sich stark ändern, wodurch die Querkräfte nicht mehr ausgeglichen sind, sondern auf beiden Seiten unterschiedlich wirken. Dadurch verliert der Pflug die Führung und weicht in Richtung der jeweils größeren Querkraft aus. Der Pflug stellt sich also in gewissem Umfang quer, bricht aus der gerade gezogenen Furche, eben der neutralen Zuglinie, aus. Dies führt zu einer höheren Beanspruchung der Lager der Hohlscheibe. Gemäß der Erfindung ist das das zweite Schneidelement bildende feststehende Schneidmesser nach hinten abgewinkelt, wodurch ein dynamisches Kräftegleichgewicht zwischen dem ersten Schneidelement und dem Schneidmesser im Sinne einer Pflügrichtungsstabilisierung erzielt werden kann. Unter feststehend ist im Zusammenhang mit dem Schneidmesser der Unterschied zu einer rotierenden Scheibe für das Schneiden der Furchensohle, was ebenfalls im Stand der Technik bekannt ist, gemeint. Der Winkel, wie weit das Schneidmesser nach hinten geneigt ist, ist verstellbar und ist insoweit, aber nur insoweit, nachdem es auf einen bestimmten, dem Boden entsprechenden Winkel eingestellt ist, feststehend.

Mit dem Schneidmesser zusammenwirkend, ist ein Anlageblech vorgesehen, das sozusagen auf dem Schneidmesser sich quer zu dessen Längsrichtung erstreckt. Dieses Anlageblech ist zusätzlich vorgesehen und stützt sich an der Furchenwand ab. Es wirkt also abstützend und pflugrichtungsstabilisierend mit dem Schneidmesser zusammen, wodurch es eine Schneidmesser-Anlageblech-Führungs-Einheit bildet. Das Messer schneidet also den Furchenboden, nachdem die Furchenwand, d.h. der Seitenbereich des Erdbalkens, abgetrennt worden ist. An der Seitenwand, d.h. der Furchenwand, stützt sich das Anlageblech ab, wodurch eine seitliche Führung gegeben ist. Die auch als Anlageblech-Unterschneidmesser-Einheit bezeichnete Schneidmesser-Anlageblech-Führungs-Einheit wirkt sozusagen als Schleifschuh mit Abstützungsfunktion. Diese Kombination aus Schneidmesser und darauf sitzendem Anlageblech verleiht der Pflügvorrichtung eine Nachlaufstabilisierung, wodurch ein seitliches Ausbrechen des Pfluges verhindert wird. Dazu ist es für die Pflügvorrichtung erforderlich, dass zumindest eine derartige Anlageblech-Unterschneidmesser-Einheit am vorzugsweise ersten Pflugmodul in Pflügrichtung vorgesehen ist. Vorzugsweise ist auch am letzten Pflugmodul eine derartige Einheit vorgesehen. Das Vorsehen einer solchen Einheit am Anfang und am Ende einer mehrere Pflugmodule aufweisenden Pflügeinrichtung ist dabei für die Pflugnachlaufstabilisierung besonders vorteilhaft. Es ist jedenfalls nicht zwingend erforderlich, dass die beschriebene Einheit an jedem Modul angebracht sein muss. Selbstverständlich ist es denkbar und möglich, im Sinne einer Vereinheitlichung und Standardisierung, alle Module gleich auszugestalten. Dies hat wesentliche Vorteile, wenn Pflugmodule ausgetauscht werden müssen, weil dann für die Vorratshaltung zu reparierender oder zu ersetzender Pflugmodule nicht unterschiedliche Lagerhaltungen erforderlich sind. Außerdem kann die erforderliche Zugkraft weiter verringert werden, wenn eine solche Einheit an jedem Pflugmodul angebracht ist.

Das auf dem Schneidmesser angebrachte Anlageblech kann entsprechend der jeweiligen Bodenbeschaffenheit hinsichtlich seiner Höhe, seines Winkels bezüglich der Pflugnachlauflinie sowie hinsichtlich des Neigungswinkels zur Schneidmesseroberfläche einstellbar ausgebildet sein. Die Verstellbarkeit kann elektrisch, mechanisch oder hydraulisch erfolgen.

Besonders vorteilhaft ist das erfindungsgemäße Pflugmodul, wenn zusätzlich zur Einstellbarkeit des Anlagebleches sowohl das erste als auch das zweite Schneidelement bezüglich ihrer Positionen relativ zueinander einstellbar sind. Damit ergibt sich auch dadurch eine Einstellbarkeit auf den zu pflügenden Boden wie auch eine Einstellbarkeit der beiden Schneidelemente einzeln oder gemeinsam zueinander. Das zweite Schneidelement ist dabei schwenkbar an der Trägerstruktur, an welcher das erste Schneidelement befestigt ist, um die Neigung des zweiten Schneidelementes beim Durschneiden durch den Boden leicht nach unten zu richten, um ein Herausfahren dieses furchenbodenschneidenden Schneidelementes während des Pflügens zu verhindern und gleichzeitig das erste Schneidelement im Boden zu halten. Das erste Schneidelement ist in mehrere Richtungen schwenkbar und versetzbar, weist also mehrere Freiheitsgrade auf, um ein entsprechend optimales Pflügergebnis im Zusammenwirken der beiden Schneidelemente zueinander zu realisieren.

Das Vorsehen von mehreren Modulen an einer Pflügvorrichtung hat des Weiteren den Vorteil, dass eine größere Breite in einem Zug mit der erfindungsgemäßen Vorrichtung gepflügt werden kann. Es ist auch ein Außer-Eingriff-Schwenken von Schneidelementen dann sinnvoll, wenn der Rand eines zu pflügenden Feldes gepflügt wird und die Breite für den letzten Zug ansonsten zu groß wäre, dass die Gefahr bestünde, dass mit dem am Weitesten seitwärts angeordneten Pflugmodul eine Bodentrennung beispielsweise eines Stückes Boden durchgeführt wird, welches möglicherweise bereits beim Nachbarfeld wäre. Um dies zu vermeiden, kann durch Außer-Eingriff-Schwenken der bzw. des entsprechenden Schneidelementes eine derartige Situation vermieden werden.

Das erfindungsgemäße Pflugmodul ist über die Grundstruktur der Pflügvorrichtung an einer Zugmaschine, wie beispielsweise einen Traktor, gekoppelt, der somit die Schneidelemente entlang der Pflügrichtung durch den Boden zieht. Die Grundstruktur kann auch Teil eines Trageisens bzw. einer Grindel sein. Mit den Pflugmodulen, welche aus an zusammengefassten Trägerstrukturen angeordneten zwei Schneidelementen bestehen, nämlich ein erstes Schneidelement zum Schneiden der Seite eines Erdbalkens und zum Wenden sowie ein zweites Schneidelement zum Schneiden der Furchensohle, kann auch auf Grindeln gänzlich verzichtet werden. Die Trägerstruktur weist Metallbalken und/oder Faserverbundelemente auf. Ferner können, wie weiter unten im Detail beschrieben ist, die angebrachten Elemente justierbar an der Trägerstruktur befestigt werden.

Der Pflugbaum bzw. das Trägergerüst, das aus der ersten und der zweiten Trägerstruktur gebildet ist, bietet somit eine starre, aber für ein Einstellen geeignete Befestigungsstruktur für die Schneidelemente an den Pflugmodulen sowie das Anlageblech an dem zweiten Schneidelement sowie für zusätzliche Bauteile wie Gelenke oder Verstellelemente. Mit anderen Worten sind die Schneidelemente an der jeweiligen ersten oder zweiten Trägerstruktur derart fixiert, dass während des Pflügens keine Relativbewegung zwischen den Schneidelementen möglich ist. Wird beim Pflügen das zweite Schneidelement aufgrund des Schneidens des Erdbalkens in den Boden gedrückt, so wird gleichzeitig das erste Schneidelement in den Boden mittels einer Einzugskraft gedrückt. Vorzugsweise können die Schneidelemente wie auch das Anlageblech aber auch während des Pflügens verstellbar sein, was beispielsweise elektrisch oder hydraulisch erfolgen kann.

Gemäß einer beispielhaften Ausführungsform sind bzw. ist das erste und/oder das zweite Schneidelement schwenkbar, beispielsweise mittels eines Gelenks, an der jeweiligen Trägerstruktur befestigt, so dass der Winkel zwischen der Drehachse und der Erstreckungsrichtung der zweiten Schneidkante eingestellt und in einer gewünschten Position fixiert werden kann. In einer weiteren vorteilhaften Ausführungsform der Erfindung ist die zweite Trägerstruktur selbst über ein Gelenk schwenkbar mit der ersten Trägerstruktur verbunden. Hierdurch ist der Anstellwinkel des zweiten Schneidelements in Bezug auf die Pflügrichtung einstellbar. Der Anstellwinkel ist dabei üblicherweise so, dass die vorlaufende Schneidkante leicht nach unten in die Erde hineingerichtet ist.

Das als Schneidmesser ausgebildete zweite Schneidelement und das Anlageblech sind über eine gemeinsame Schwenkachse zusammen mit dem Anstellwinkel des Schneidmessers winkelmäßig verschwenkbar. Damit kann das Unterschneiden des Erdbalkens so ausgeführt werden, dass der Pflug in der gewünschten Tiefe verbleibt und, dass das Anlageblech für eine Abstützwirkung an der Furchenwand im Zusammenhang mit einer Nachlaufstabilisierung des Pfluges einstellbar an unterschiedliche Bodenqualitäten angepasst werden kann. Zusätzlich ist eine Lochplatte vorgesehen, in welcher die Höhe des Anlagebleches zusammen mit dem Schneidmesser am jeweiligen Modul der Pflügeinrichtung ebenfalls einstellbar ist.

In einer weiteren beispielhaften Ausführungsform sind auch das erste Schneidelement und/oder das zweite Schneidelement schwenkbar und/oder translatorisch verschiebbar an der jeweiligen Trägerstruktur angeordnet, um den Anstellwinkel und die Positionen zueinander einzustellen. Somit kann abhängig von der Bodenbeschaffenheit und abhängig von der gewünschten Bearbeitungstiefe neben dem Anstellwinkel des zweiten Schneidelements in Bezug auf die Pflügrichtung auch eine Position und/oder ein Winkel der Schneidelemente zueinander eingestellt werden.

Eine Vorrichtung wie z. B. das oben beschriebene Gelenk dient zum Verstellen des Schneidelementwinkels (Anstellwinkel Schneidmesser) und ermöglicht die Einstellung des Schneidelement-Neigungswinkels (Vertikalneigung Hohlscheibe zur Furchenwand des Bodens) und des Schneidelement-Richtungswinkels (zur Pflügrichtung, d. h. zur Schlepperfahrrichtung). Die Schneidelinie des Schneidelements zwischen der ersten Schneidkante und der Furchenwand kann mittels einer verstellbaren Stütze höhenverstellt werden. Entsprechend kann der vertikale und/oder horizontale Abstand zwischen dem ersten Schneidelement und dem zweiten Schneidelement variabel eingestellt werden. Mit anderen Worten können in einer weiteren beispielhaften Ausführungsform das erste Schneidelement und das zweite Schneidelement derart zueinander angeordnet sein, dass der Schneidbereich der ersten Schneidkante des ersten Schneidelements von der zweiten Schneidkante des zweiten Schneidelement vertikal beabstandet ist. Mittels einer Verstellung in der horizontalen Richtung ist die Schnittbreite bzw. Pflügbreite eines Zuges einstellbar.

In Ausführung der Erfindung ist es bevorzugt, dass der erste Schneidbereich innerhalb einer ersten Schneidebene und der zweite Schneidbereich in einer zweiten Schneidebene ausgebildet sind, wobei die erste Schneidebene und die zweite Schneidebene zueinander einen Winkel von 30° bis 135°, insbesondere 45° bis 110°, ausbilden. Die Einstellung des gewünschten Winkels kann hierfür dadurch erfolgen, dass die beiden Schneidelemente schwenkbar auf der jeweils zugehörigen Trägerstruktur gelagert sind. Selbstverständlich liegt auch eine vorgegebene, feste Ausrichtung der beiden Schneidebenen im Rahmen der Erfindung.

Die erste Schneidkante läuft dabei in einer ersten Schneidebene, während die zweite Schneidkante in einer zweiten Schneidebene verläuft. Das erste Schneidelement und das zweite Schneidelement sind dabei derart relativ zueinander an der Trägerstruktur befestigt, dass die erste Schneidebene und die zweite Schneidebene einen Winkel von insbesondere mehr oder weniger als 90° (Öffnungswinkel) zueinander aufweisen. Mit anderen Worten kann in einer weiteren beispielhaften Ausführungsform das erste Schneidelement derart angeordnet sein, dass zwischen der Drehachse des ersten Schneidelements und einer Erstreckungsrichtung der zweiten Schneidkante ein Winkel von ungefähr 0° bis ungefähr ±30° Grad vorliegt. Insbesondere weist die Normale der ersten Schneidebene eine (Richtungs-) Komponente auf, welche parallel zu einer Horizontalrichtung ist, wenn die Pflügvorrichtung bestimmungsgemäß auf dem Boden aufliegt. Die Drehachse des Schneidelements ist insbesondere parallel zu der Normalen der ersten Schneidebene. Ferner weist die Normale der zweiten Schneidebene eine weitere (Richtungs-) Komponente auf, welche parallel zu einer Vertikalrichtung ist, wenn die Pflügvorrichtung bestimmungsgemäß auf dem Boden aufliegt. Ein Winkel zwischen den Normalen kann zwischen 45° Grad und 130° Grad beispielsweise ausgewählt werden, um ein gewünschtes Furchenbild im Boden zu erzielen.

Wenn die erste Schneidebene und die zweite Schneidebene insbesondere ca. 90° zueinander aufweisen, so drückt das zweite Schneidelement den unterschnittenen Erdbalken in Richtung des ersten Schneidelementes. Dies führt dazu, dass während der Bewegung in Pflügrichtung der Erdbalken zwischen dem ersten Schneidelement und dem zweiten Schneidelement vorteilhaft bearbeitet werden kann. Durch das Zusammenwirken des rotierenden ersten Schneidelements mit dem zweiten feststehenden, abgewinkelt angeordneten Schneidelement wird ein bevorzugtes Pflügergebnis bzw. eine "Krümelung" (Schollenzerkleinerung) bereitgestellt. Außerdem wird der starke Seitenzug des ersten Schneideelements, der sich negativ auf die Schlepperzuglinie auswirkt, durch die Gegenwirkung des zweiten Schneideelements weitgehend kompensiert. Es wird also ein Ausgleich zwischen den Querkräften erzielt. Die Zugmaschine bleibt somit ohne großes Gegensteuern in der Spur, d.h. die Pflügvorrichtung ist nachlaufstabilisiert bei gleichzeitig verringerter Zugkraft.

Das erste Schneidelement ist rotierbar bzw. drehbar an der ersten Trägerstruktur befestigt. Entsprechend weist das erste Schneidelement eine erste Drehachse auf, um welche dieses sich dreht. Das erste Schneidelement ist bevorzugt als bombierter Schneidteller ausgebildet und weist eine kreisrunde Umfangslinie auf. Entlang der Umfangslinie ist die umlaufende erste Schneidkante ausgebildet. Mittels der ersten Schneidkante wird der Seitenbereich des Erdbalkens von der Furchenwand des Bodens getrennt und der Erdbalken zugleich seitlich abgeleitet. Die umlaufende erste Schneidkante weist einen ersten Schneidbereich auf. Der erste Schneidbereich ist derjenige Umfangsabschnitt der ersten Schneidkante, welcher in Pflügrichtung vorzugsweise als erstes in Kontakt mit dem Boden kommt und diesen schneidet. Das erste Schneidelement kann einen Durchmesser von ungefähr 500 mm bis ungefähr 800 mm aufweisen. Ferner kann das erste Schneidelement eine Zahnung aufweisen, zentral gelagert und in der Position gegenüber der ersten Trägerstruktur und dem zweiten Schneidelement, vorzugsweise mittels eines Schlittens, verstellbar sein.

Von besonderem Vorteil ist es, wenn das um eine Drehachse drehbare erste Schneidelement bombiert ist oder eine Kegelform oder eine Kegelstumpfform aufweist. Hierdurch ist gewährleistet, dass der abgetrennte Erdbalken gedreht und in der benachbarten, in der bei einem zuvor erfolgten Durchgang eines Pflugmoduls erzeugten Furche abgelegt wird. Hierbei ist die Drehachse des ersten Schneidelements unter einem Winkel zur Pflügrichtung eingestellt, derart, dass die vorlaufende Kante des Schneidelements gegenüber der Pflügrichtung einen Winkel bildet und das Schneidelement im Wesentlichen sich schräg zur Pflügrichtung und damit zum von ihr zu schneidenden Erdbalken erstreckt. Die Hohlscheibe weist je eine Neigung zur Zugrichtung und zur Senkrechten der Furche auf, d.h. sie ist furchen- und zugrichtungsgeneigt. Die Zugrichtungsneigung, auch als Schnittwinkel bezeichnet, beträgt vorzugsweise 10 bis 30°. Die Neigung zur Senkrechten der Furche beträgt vorzugsweise 10 bis 35°.

Das erste Schneidelement wird selbsttätig rotiert, wenn sich die Pflügvorrichtung entlang des Bodens bewegt. Hierbei bewirken Reibungskräfte, dass das erste Schneidelement bewegt wird. Es ist dabei bevorzugt derart dimensioniert, dass während des Pflügens nur seine untere Hälfte, welche sich unter der ersten Drehachse befindet, in den Boden eindringt, so dass Reibkräfte mit dem Boden die Rotation induzieren können.

Die Rotation des bombierten oder tellerförmig ausgebildeten ersten Schneidelements bewirkt ferner, dass der abgetrennte Erdbalken angehoben und zugleich zur Seite abgeleitet wird. Der abgetrennte Erdbalken ist insbesondere in Reibkontakt mit einer ersten Schneidfläche des ersten Schneidelements. Die erste Schneidfläche ist diejenige Fläche des ersten Schneidelements, welche innerhalb der ersten Schneidkante ausgebildet ist. Ferner ist die erste Schneidfläche diejenige Fläche, welche zu dem abgetrennten Erdbalken gerichtet ist. Die erste Schneidfläche kann homogen ohne Aussparungen oder Erhebungen ausgebildet sein. Ferner kann die erste Schneidfläche (d. h. die Mantelfläche des ersten Schneidelements) eine Kegelform bzw. eine Kegelstumpfform ausbilden.

Erfindungsgemäß ist das zweite Schneidelement als Schneidmesser ausgebildet und bezüglich seines Anstellwinkels einstellbar gelagert, wobei die zweite Schneidkante durch den feststehenden Rand des zweiten Schneidelements definiert ist. Das verstellbare Schneidmesser des zweiten Schneidelementes hat eine Schneidkante, die sich quer zur Pflügrichtung erstreckt. Das Schneidelement, welches an seiner Schneide vorzugsweise gezahnt ist, ist vorzugsweise, bezogen auf die Pflügrichtung, mit einem definierten Winkel mit seiner Spitze leicht nach hinten gerichtet, d. h. hat einen Winkel von größer 90° zur Pflügrichtung. Mittels der zweiten Schneidkante wird der Bodenbereich des Erdbalkens von der Furchensohle des Bodens getrennt, unterschnitten und ggf. zugleich angehoben. Der zweite Schneidbereich ist durch das Schneidmesser als zweite Schneidkante gebildet, welche in Pflügrichtung als zweites in Kontakt mit dem Boden kommt und diesen schneidet.

Das erste Schneidelement, z. B. eine bombierte Scheibe, schneidet den Erdbalken in einer ersten, vertikalen Schichtebene, beispielsweise bei einer Bearbeitungstiefe von ca. 15 bis 35 cm, von der Bodenoberfläche ausgehend, ab und leitet den Erdbalken in eine zuvor gebildete Furche.

In der zweiten, horizontalen Schichtebene, die in der Bearbeitungstiefe ca. 15 bis 35 cm von der Bodenoberfläche ausgehend liegt, wird der Erdbalken durch das zweite Schneidelement, das Schneidmesser, horizontal, d. h. von der Furchensohle, geschnitten, wobei das dynamische Kräftegleichgewicht zwischen beiden Schneidelementen pflügnachlaufstabilisierend wirkt.

Der Abstand der beiden Schneidebenen, (oben: rotierendes erstes vertikales Schneidelement; und unten: zweites horizontales, als Schneidmesser ausgebildetes Schneideelement) kann durch eine Verstellmöglichkeit des rotierenden Schneidelements angepasst werden.

Der effektive Pflugkörper, bestehend aus den Hauptkomponenten erstes bombiertes Schneidelement und zweites ebenes Schneidelement in Form des Schneidmessers entspricht etwa einer schiefen, gewundenen Ebene, die durch den Boden gezogen wird. Der abgetrennte Erdbalken schiebt sich entlang des bombierten ersten Schneidelements an dessen Innenseite hoch und zur Seite. Dieser Vorgang beinhaltet eine Stauchung der oberen sowie eine Dehnung der unteren Hälfte des Erdbalkens. Innerhalb des Erdbalkens entstehen als Folge Druck-, Zug- und Drehspannungen, die zusätzlich zur Fallbewegung des Erdbalkens infolge Schwerkraft die Zerteilung des Bodens bewirken.

Mit der erfindungsgemäßen Anordnung des zweiten Schneidelements in Pflügrichtung hinter dem ersten Schneidelement kann die Reibkraft, welche ansonsten zu einer hohen benötigten Zugkraft der Pflügvorrichtung führt, reduziert werden. Da der Erdbalken, wenn er von dem ersten Schneidelement an seiner Seite geschnitten wird, bereits durch das zweite Schneidelement von der Furchensohle unterschnitten getrennt ist, wird der Erdbalken von dem ersten Schneidelement bereits angehoben und gewendet. Der zweite Schneidbereich liegt in Pflügrichtung beispielsweise zwischen 1 cm und 50 cm, insbesondere 15 cm bis 25 cm, hinter dem ersten Schneidbereich. Das im Wesentlichen horizontale, das zweite Schneidelement darstellende Schneidmesser kommt als zweites in Kontakt mit dem Boden und läuft sozusagen gegenüber der im Wesentlichen vertikal angeordneten ersten Schneidscheibe bzw. dem Schneidelement nach bzw. hinterher. Diese Anordnung des zweiten Schneidelements "unter-schneidet" die Furchenwand bzw. den zu pflügenden Erdbalken horizontal und erleichtert damit die Schieferung/Furchenräumung wesentlich. Das vertikal angeordnete bombierte erste Schneidelement schneidet den mittels des nachgelagerten zweiten Schneidelements horizontal vorgeschnittenen Erdbalken beim nachfolgenden Zug vertikal ab und wendet ihn durch die Rotationsbewegung der Hohlscheibe zugleich und legt ihn seitlich ab, vorzugsweise in die Furche.

Die Pflügvorrichtung ermöglicht somit einen leichtzügigen Pflüge-Effekt mit Nachlaufstabilisierung. Der Reibungskoeffizient gegenüber herkömmlichen starren Pflugkörpern wird erheblich herabgesetzt, weil das erste Schneidelement sich mitdreht. Mit diesem Konzept wird ein leichtzügiger, kraftstoffsparender Pflug bereitgestellt, der zugleich ein nahezu saatbeetfertiges konstantes Furchenbild erzeugt, wobei durch den dynamischen Ausgleich der Querkräfte die Zugkraft zusätzlich verringert wird.

Das zweite Schneidelement kann mittels einer elektrischen, mechanischen oder hydraulischen Verstellvorrichtung bezüglich seines Anstellwinkels optimal auf sich verändernde Bodenbeschaffenheiten eingestellt werden, vorzugsweise auch während des Pflügens.

Gemäß einer weiteren beispielhaften Ausführungsform ist die erste bzw. auch die zweite Schneidkante des ersten bzw. zweiten Schneidelements bombiert und verzahnt ausgebildet. Eine bombierte Ausführung bedeutet, dass die erste bzw. die zweite Schneidkante gewölbt ausgebildet ist. Eine verzahnte Ausführung bedeutet, dass Vertiefungen oder Erhebungen (Verzahnung) an der Schneidkante ausgebildet sind. Damit kann eine verbesserte Schneidwirkung des ersten bzw. auch des zweiten Schneidelements beim Abtrennen des Erdbalkens erzielt werden. Mittels der kugelkalottenförmigen Ausbildung insbesondere des ersten Schneidelementes kann der an ihr entlanggleitende Erdbalken eine Wendung erfahren, so dass auf die Anbringung eines Streichbleches bzw. Leitbleches verzichtet werden kann. Die Ausbildung der ersten Schneidkante des ersten Schneidelements und/oder der zweiten Schneidkante des zweiten Schneidelements mit Aussparungen am Umfang ergibt eine Bauform in der Art eines Kreissägeblattes, welches besonders leicht durch das Erdreich dringt. Der Hohlscheiben-Schneideteller ist durch Eingriff mit dem Erdreich in Drehung versetzbar.

Mittels der beschriebenen Pflügvorrichtung wird eine Zugkraft-/Kraftstoffersparnis durch deren Leichtzügigkeit ermöglicht. Ferner ist die Pflügvorrichtung universell einsetzbar und funktioniert nahezu bei allen Bodenverhältnissen. Außerdem wird durch die Rotationsbewegung des Schneidtellers der Erdbalken kontinuierlich gebrochen. Dadurch wird die gewünschte Krümelung der Scholle (Schollenzerkleinerung) erreicht. Durch den Schollenzerkleinerungs-Effekt können die Nachbearbeitungsgänge reduziert werden. Dies spart Arbeitsgänge bis zur Saatbeet-Bearbeitung. Außerdem wird der Boden vorteilhaft durchmischt. Ferner sind konventionelle Standardkomponenten bzw. Standardzusatzwerkzeuge, wie Düngereinleger und Scheibensech, nicht länger notwendig. Durch das rotierende erste Schneidelement entsteht weniger Verschleiß, wodurch Ersatzteilkosten reduziert werden. Durch diese schonende Bodenbearbeitung wird humusschädigender Metallabrieb von den Schneidelementen gegenüber einer Pflügvorrichtung mit herkömmlichem Streichblech weitestgehend vermieden bzw. vermindert.

Gemäß einer weiteren beispielhaften Ausführungsform weist die Pflügvorrichtung zumindest ein weiteres Pflugmodul mit ebenfalls einem rotierbaren ersten Schneidelement mit einer umlaufenden weiteren ersten Schneidkante auf, und ist derart ausgebildet, dass bei Bewegen der Trägerstruktur über den Boden entlang der Pflügrichtung ein weiterer Seitenbereich eines weiteren Erdbalkens von dem Boden mittels des weiteren Pflugmoduls abschneidbar ist und das weitere erste Schneidelement rotierbar ist, so dass der weitere Erdbalken mittels des weiteren ersten Schneidelements anhebbar ist.

Mit der oben beschriebenen Ausführungsform wird verdeutlicht, dass eine Vielzahl von Pflugmodulen in Pflügrichtung nebeneinander, d. h. entlang einer Richtung orthogonal (in einer Horizontalebene) zu der Pflügrichtung, beabstandet und nebeneinander angeordnet werden können. Somit kann eine Vielzahl von in Pflügrichtung nebeneinander angeordneten Erdbalken aus dem Boden geschnitten, angehoben und gegebenenfalls gewendet werden.

Beim Anordnen einer Vielzahl bzw. Mehrzahl von entsprechenden Pflugmodulen und damit einer entsprechenden Anzahl von Schneidelementen in Pflügrichtung hintereinander kann aufgrund des seitlichen Versatzes der einzelnen Pflugmodule zueinander quer zur Pflügrichtung in einem Zug eine breitere Fläche gepflügt werden, als es der Fall ist, wenn nur ein einziges Pflugmodul in einem Zug zum Einsatz gelangt. Wiederum ist es für die Funktionalität der Pflügvorrichtung vorteilhaft, wenn Schneidelemente außer Eingriff und damit aus ihrer eingestellten Position herausschwenkbar sind. Damit ist es möglich, beispielsweise aus einem nachlaufenden Schneidelement ein vorlaufendes zu machen. Das kann in der Kombination mehrerer Pflugmodule einer Pflügvorrichtung vorteilhaft für unterschiedliche Parameter wie beispielsweise auch Bodenbeschaffenheit im Sinne einer optimalen Anpassung sinnvoll bzw. von Vorteil sein. Durch die winkelmäßige Einstellbarkeit des Schneidmessers als zweitem Schneidelement wird ein dynamisches Kräftegleichgewicht der Querkräfte zwischen der Hohlscheibe und dem Schneidmesser erreicht, wodurch eine Pflügnachlaufstabilisierung erzielbar ist. Es versteht sich, dass die aus mehreren Pflugmodulen bestehende Pflügvorrichtung normalerweise eine umso höhere Zugkraft erfordert, je mehr Pflugmodule an einem Träger zu einer Pflügvorrichtung zusammengefasst sind. Ohne die Pflügrichtungsstabilisierung wären die seitlich wirkenden Kräfte, welche ein seitliches Abdriften der Pflügvorrichtung von der geraden Zuglinie begünstigen, stärker als bei Vorhandensein von nur einem einzigen Pflugmodul. Umso wichtiger ist das Vorsehen einer Pflügnachlaufstabilisierung durch entsprechende Einstellung oder Verstellung des Schneidmessers, welches zusätzlich eine pflügrichtungsstabilisierende abstützende Wirkung durch Vorsehen eines Anlagebleches hat. Es hat sich gezeigt, dass das zusätzliche Anlageblech zusammen mit einer winkelmäßigen Einstellbarkeit des Schneidmessers zur Erzielung eines dynamischen Kräftegleichgewichtes der Querkräfte von erstem Schneidelement in Form der Hohlscheibe und zweitem Schneidelement in Form des Schneidmessers eine Pflügnachlaufstabilisierung erreicht, wenn bei Vorhandensein von mehreren Pflugmodulen an einer Pflügvorrichtung bereits das in Zugrichtung erste und letzte Pflugmodul mit einem derartigen Element in Form des Anlagebleches und dem winkelmäßig verstellbaren Schneidmesser versehen ist. Dies stellt einen Kompromiss dar zwischen einer niedrigen Zugkraft und der ein seitliches Ausbrechen der Pflugvorrichtung von der idealen Zuglinie bewirkenden Kraft dar. Selbstverständlich ist der höhere Bauaufwand gerechtfertigt, das Anlageblech und die Verstellbarkeit des Schneidmessers für sämtliche Pflugmodule vorzusehen, akzeptabel.

Mit der erfindungsgemäßen Pflügvorrichtung wird beispielsweise mit dem oberen rotierbaren bombierten ersten Schneideelement selbst ohne ein Leitblech und ohne Streichblech ein schonendes und flaches Wenden des Erdbalkens des Bodens bis z. B. 15 Zentimeter ermöglicht. Aber erst ein zusätzliches Anlageblech und eine Verstellbarkeit des Anstellwinkels des Schneidmessers schaffen eine Pflügrichtungsstabilisierung.

In einer beispielhaften Ausführungsform sind das erste Schneidelement und das zweite Schneidelement austauschbar (z. B. mittels Schraubverbindungen) an der jeweiligen Trägerstruktur angeordnet. Die erste Trägerstruktur ist hierbei derart ausgebildet, dass sie an das Grundgerüst der Pflügvorrichtung in lösbarer Weise montierbar ist, was bevorzugt über Schraubverbindungen erfolgt. Zur Steinsicherung können auch Scherbolzen, Gummipakete oder Federelemente vorgesehen sein. Die hierfür vorgesehenen Montageelemente, wie Bohrungen oder Zapfen, sind bevorzugt derart beschaffen und angeordnet, dass sie mit handelsüblichen Grundgerüsten für Pflügvorrichtungen kompatibel sind. Somit kann das Pflugmodul ohne weiteres an die Grundstruktur einer Pflügvorrichtung an Stelle beispielsweise eines Pflugkörpers nachgerüstet werden.

Aufgrund der Rotation des ersten Schneidelements wird der abgetrennte Erdbalken leicht angehoben, gewendet und auf die Furche abgegeben. Bei Bewegung der Pflügvorrichtung entlang der Pflügrichtung wird der Erdbalken in Pflügrichtung gewendet.

Aufgrund des Anhebens des Erdbalkens mittels des rotierenden ersten Schneidelements kann der Erdbalken energieeffizient in Pflügrichtung hinter dem Schneidelement abgelegt werden.

Bei dem erfindungsgemäßen Pflugmodul ist das zweite Schneidelement als ein feststehendes Schneidmesser ausgebildet. Das Schneidmesser ist hierbei als eine flache rechteckige, gerade oder gebogene Klinge ausgebildet, welche an einem Endbereich an der zweiten Trägerstruktur befestigt ist. Die Befestigung erfolgt bevorzugt durch Verschraubung, was auch einen einfachen Austausch des zweiten Schneidelements bei Abnutzung ermöglicht. Die Schneide der Klinge zeigt in ihrer Arbeitsstellung in Pflügrichtung und ist generell quer zu dieser Richtung orientiert.

In einer vorteilhaften Abwandlung dieser Bauform ist das Schneidmesser des zweiten Schneidelements L-förmig ausgebildet, wobei ein erster Balken des Schneidmessers in Arbeitsstellung des Pflugmoduls horizontal ausgerichtet ist und ein zweiter Balken im Wesentlichen senkrecht hierzu ausgerichtet ist. Der erste Balken schneidet somit den Bodenbereich des zu bildenden Erdbalkens. Der zweite, in Arbeitsstellung des Pflugmoduls vertikale Balken liegt vor dem ersten Schneidelement und erleichtert dessen Eindringen in den Boden, da er im Wesentlichen in derselben Ebene wie die vorlaufende Kante des ersten Schneidelements verläuft. Schon aus Gründen der mechanischen Robustheit ist es zweckmäßig, dass das Schneidmesser einstückig ausgebildet ist. Es hat generell die Form einer flachen Klinge, die auf der Vorderseite eine geschärfte Schneide aufweist. Der Anstellwinkel der Klinge in Bezug auf die Pflügrichtung ist einstellbar, um zu gewährleisten, dass eine gewünschte Eindringtiefe des Pflugmoduls in den Boden erreicht und gehalten wird. Zusammen mit dem an der Furchenwand sich kräftemäßig abstützenden Anlageblech wird eine Pflügnachlaufstabilisierung erreicht.

Die Erfindung umfasst gemäß Anspruch 14 auch eine Pflügvorrichtung, an deren Grundgerüst mindestens ein Pflugmodul gemäß der Erfindung angeordnet ist, vorzugsweise sechs bis 16 derartige Pflugmodule angeordnet sind. Das Pflugmodul ist hierbei bevorzugt über Schraubverbindungen mit dem Grundgerüst fest verbunden, wobei die Verbindung über die erste Trägerstruktur erfolgt. Es versteht sich, dass am Grundgerüst und an der ersten Trägerstruktur kompatible Befestigungselemente wie Bohrungen oder Gewindebolzen ausgebildet sein müssen. Alternativ kann auch ein Adapterelement vorgesehen sein, um das Pflugmodul an verschiedene Grundgerüste von Pflügvorrichtungen anpassen und befestigen zu können. Ein jeweiliges Pflugmodul lässt sich somit in einfacher Weise an einem Grundgerüst montieren oder beispielsweise zu Wartungszwecken entfernen.

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
- Fig. 1: eine Darstellung eines Pflugmoduls mit Hohlscheibe und Schneidmesser;
- Fig. 2: eine schematische Darstellung einer Pflügvorrichtung gemäß einer beispielhaften Ausführungsform der vorliegenden Erfindung;
- Fig. 3: zwei hintereinander angeordnete Pflugmodule gemäß der Erfindung, in welcher als erstes Schneidelement eine Hohlscheibe und als zweites ein Schneidmesser gezeigt sind;
- Fig. 4: eine Darstellung einer Teilansicht einer erfindungsgemäßen Pflügvorrichtung als Rückansicht der Darstellung gemäß Figur 3 mit Anlageblech; und
- Fig. 5 a), b), c): drei Teilansichten eines Pflugmoduls gemäß der Erfindung.

Gleiche oder ähnliche Komponenten in unterschiedlichen Figuren sind mit gleichen Bezugsziffern versehen. Die Darstellungen in den Figuren sind weitgehend schematisch und lediglich beispielhaft.

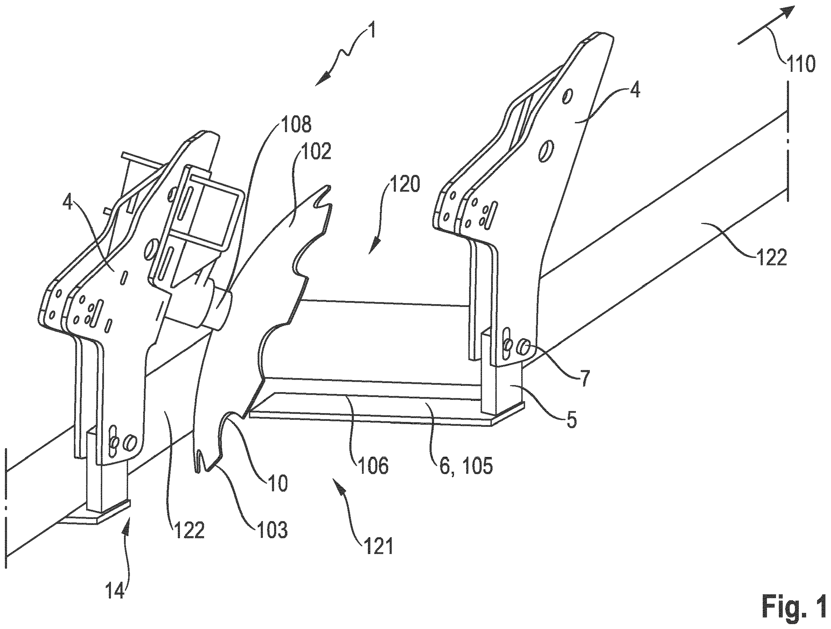

Figur 1 zeigt ein Pflugmodul 1 zum Pflügen eines Bodens 120, bei welchem ein erstes Schneidelement 102 in Form einer kugelkalottenförmigen Hohlscheibe vor einem zweiten Schneidelement 105 in Form eines Schneidmessers 6 in Pflügrichtung 110 hintereinander angeordnet sind. Das erste Schneidelement 102 ist zum Schneiden der Seitenfläche eines nicht dargestellten Erdbalkens vorgesehen, wohingegen das nach dem ersten Schneidelement 102 angeordnete zweite Schneidelement 105 als Schneidmesser 6 ausgebildet ist, welches den Furchenboden schneidet. Beide Schneidelemente 102, 6/105 sind mittels einer Trägerstruktur 4, 5 als Pflugmodul zusammengefügt. Die Trägerstruktur 4, 5 kann an einem Grundgerüst (nicht gezeigt) befestigt sein, wobei das zweite Schneidelement 105 mit dem ersten Schneidelement 102 über dessen Trägerstruktur 4 gelenkig verbunden ist.

Wie in Figur 1 gezeigt ist, ist ein rotierbares erstes Schneidelement 102 mit einer umlaufenden, bombierten ersten Schneidkante 103 an einer ersten Trägerstruktur 4 angeordnet und derart ausgebildet, dass bei Bewegen der Trägerstruktur 4 auf dem Boden 120 entlang der Pflügrichtung 110 ein Seitenbereich 122 eines nicht dargestellten Erdbalkens des Bodens 120 mittels eines ersten Schneidbereichs der ersten Schneidkante 103 schneidbar ist, wie in Figur 1 gezeigt ist. Die Pflügrichtung 110 ist definiert als die Richtung, entlang welcher die Pflügvorrichtung 3 über dem Boden 120 verfahren wird. Ein zweites Schneidelement 105 mit einer zweiten Schneidkante 106 ist an einer zweiten Trägerstruktur 5 angeordnet, die mit der ersten Trägerstruktur 4 lösbar verbunden und gegenüber der ersten Trägerstruktur 4 bezüglich des Anstellwinkels schwenkbar ist. Das zweite Schneidelement 105 ist derart ausgebildet, dass bei Bewegen der Trägerstruktur 5 auf dem Boden 120 entlang der Pflügrichtung 110 ein Bodenbereich des Erdbalkens des Bodens 120 mittels des zweiten Schneidbereichs der zweiten Schneidkante 106 abschneidbar ist. Das zweite Schneidelement 105 ist relativ zu dem ersten Schneidelement 102 in Pflügrichtung 110 derart angeordnet ist, dass der zweite Schneidbereich in Pflügrichtung 110 nach dem ersten Schneidbereich angeordnet ist. Der zweite Schneidbereich ist somit von dem ersten Schneidbereich mit dem Abstand x beabstandet.

Da beim Pflügen das Grundgerüst 2 des Pflugmoduls 1 mit der ersten und zweiten Trägerstruktur 4 und 5 in Richtung Trennfläche 121 bzw. Furchensohle des Bodens 120 gedrückt wird, wird entsprechend auch das erste Schneidelement 102 in Richtung der Trennfläche 121 gedrückt, so dass das erste Schneidelement 102 in der gewünschten Bodentiefe während des Pflügens gehalten wird.

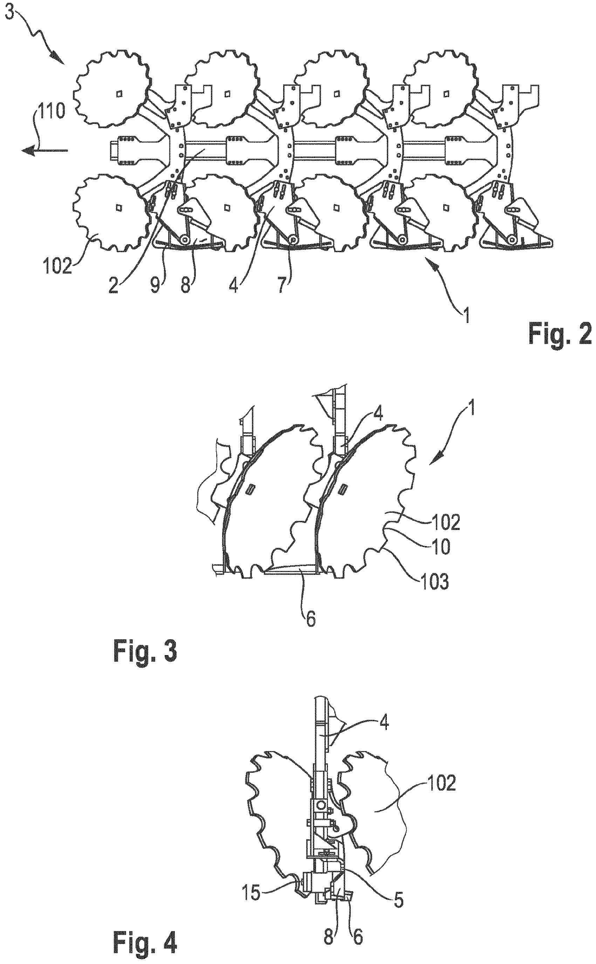

Figur 2 zeigt eine schematische Darstellung der wesentlichen Funktionselemente einer Pflügvorrichtung gemäß einer beispielhaften Ausführungsform der vorliegenden Erfindung. Diese Figur 2 zeigt die korrekte räumliche Anordnung der ersten und zweiten Schneidelemente 102 und 105 sowie die Bildung und Wendung von Erdbalken. Die übrigen Bauteile der zugehörigen Pflügvorrichtung 3 sind der Übersichtlichkeit wegen nicht gezeigt.

Die in Figur 2 dargestellte Pflügvorrichtung 3 weist in üblicher Bauart ein Grundgerüst bzw. einen Pflugbaum 2 auf, von welchem aus sich nach beiden Seiten entsprechend angebrachte Pflugmodule 1 erstrecken. Die Pflugmodule 1 weisen erfindungsgemäß jeweils ein als Hohlscheibe ausgebildetes erstes Schneidelement 102 und diesem zugeordnet ein als Schneidmesser 6 ausgebildetes zweites Schneidelement 105 mit zusätzlich daran angebrachtem Anlageblech 8 auf, welche in der Art eines Schleifschuhs ausgebildet ist. Gemäß der Darstellung von Figur 2 sind die Pflugmodule 1 mit Anlageblech 8 von ihrer Rückseite gezeigt, was bedeutet, dass sich das in Figur 2 nicht dargestellte Schneidmesser 6 von der Rückseite dieses Anlagebleches 8 aus erstreckt. Eingezeichnet ist eine erste Trägerstruktur 4, welche über ein Gelenk 7 die Möglichkeit bietet, das Schneidmesser 6 zusammen mit dem Anlageblech 8, welches sozusagen auf der nach oben weisenden Ebene des Schneidmessers 6 sitzt, im Sinne einer Verstellbarkeit des Anstellwinkels des Schneidmessers 6 an unterschiedliche Pflüg- und Bodenbedingungen angestellt werden kann. Ein jeweiliges Modul der Pflügvorrichtung 3 besteht also aus dem als Hohlschiebe ausgebildeten ersten Schneidelements 102 und dem Schneidmesser 6 mit dem Anlageblech 8, welches über die erste Trägerstruktur 4 indirekt mit dem Grundgerüst 2, welches auch als Pflugbaum bezeichnet wird, verbunden ist. Die Funktion des Anlagebleches 8 besteht darin, zum dynamischen Kräfteausgleich der Querkräfte beizutragen und sich an der nicht eingezeichneten, den Seitenbereich einer Furche bildenden Furchenwand 122 abzustützen. Dadurch kann für die Pflügvorrichtung 3 eine Nachlaufstabilisierung in dem Sinne gefunden werden, dass der Pflug auf Grund der Tatsache, dass die Hohlscheibe 102 beim Schneiden des Bodens 120 und der sich daran anschließenden, durch das Hohle der Scheibe realisierte Wenden des Erdbalkens eine Seitenkraft erzeugt, nachlaufstabilisiert. Durch diese ohne das Anlageblech 8 vorhandene Seitenkraft würde die Pflügvorrichtung 3 die Tendenz haben, von ihrer geraden Nachlauflinie abzuweichen; eine Nachlaufstabilisierung fände dann nicht statt.

In Figur 3 sind zwei hintereinander angeordnete, gegenüber von Figur 2 etwas vergrößerte Pflugmodule gemäß der Erfindung dargestellt, bei welchem das erste Schneidelement 102 als eine bombierte Hohlscheibe mit einer ersten Schneidkante 103 und in der Schneidkante vorgesehene Aussparungen sozusagen gezähnt ausgebildet ist. Auf der konvexen Rückseite der Hohlscheibe 102 ist die erste Trägerstruktur 4 angedeutet, welche an ihrem unteren Ende das Schneidmesser 6 zeigt. Der Anstellwinkel des Schneidmessers 6 kann so eingestellt werden, dass eine Kraft in Richtung des Bodens 121 bzw. der Furchensohle (nicht eingezeichnet) ausgeübt wird, wodurch das gesamte Pflugmodul 1 und damit die Pflügvorrichtung 3 in der gewünschten Pflügtiefe gehalten wird.

Wie in Figur 1 dargestellt, ist die Trägerstruktur 4 und 5 für die beiden Schneidelemente 102 und 105 so ausgebildet, gemeinsam zumindest das erste Schneidelement 102 und das zweite Schneidelement 105 mit dem Grundgerüst 2 einer Pflügvorrichtung 3 fest zu verbinden. Die erste Trägerstruktur 4 ist über das Grundgerüst 2 der Pflügvorrichtung 3 an einer Zugmaschine, wie beispielsweise einem Traktor, befestigbar, um somit entsprechend die Schneidelemente 102, 105 entlang der Pflügrichtung 110 anzutreiben. Das Pflugmodul 1 weist beispielsweise die erste und zweite Trägerstruktur 4, 5 auf, die fest oder über Gelenke schwenkbar ausgebildet sein können.

Die erste und die zweite Trägerstruktur 4 bzw. 5 bilden somit eine starre Befestigungsstruktur für die Schneidelemente 102, 105. Die Schneideelemente 102, 105 sind derart an den Trägerstrukturen 4, 5 fixiert, dass während des Pflügens keine Relativbewegung zwischen den Positionen der Schneidelemente 102, 105 möglich ist. Wird somit erfindungsgemäß das zweite Schneidelement 105 aufgrund des Schneidens des Erdbalkens in Richtung Boden 120 gedrückt, so wird gleichzeitig auch das erste Schneidelement 102 in den Boden 120 gedrückt, da beide Trägerstrukturen 4, 5 fest miteinander verbunden sind.

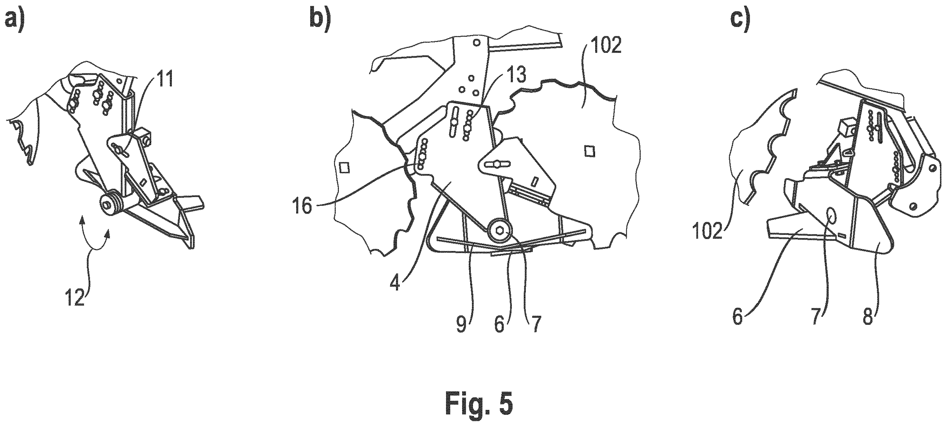

Das erste Schneidelement 102 ist rotierbar und das zweite Schneidelement 105 schwenkbar bzw. seines Anstellwinkels an der jeweiligen Trägerstruktur 4 oder 5 befestigt. Entsprechend besitzt das erste Schneidelement 102 eine Drehachse, um welche sich das Schneidelement 102 dreht. Das zweite Schneidelement 105 bildet eine Schwenkachse über das Gelenk 7 aus, um welche das zweite Schneidelement 105 mit seinem Anstellwinkel schwenkbar ist. Das erste Schneidelement 102 ist hier beispielhaft als kugelkalottenförmiger Schneidteller ausgebildet und weist eine kreisrunde Umfangslinie auf. Entlang der Umfangslinie ist die entsprechende umlaufende, Aussparungen 10 aufweisende erste Schneidkante 103 ausgebildet. Mittels der ersten Schneidkante 103 wird der Seitenbereich 122 (siehe Figur 1) des Erdbalkens von der Furchenwand 122 des Bodens 120 getrennt. Die umlaufende erste Schneidkante 103 weist einen Schneidbereich auf, welcher derjenige Umfangsabschnitt der ersten Schneidkante 103 ist, welcher in Pflügrichtung 110 als erstes in Kontakt mit dem Boden 120 kommt und diesen schneidet. Mittels dem Schneidmesser 6 als zweitem Schneidelement 105 wird ein Bodenbereich 121 des Erdbalkens von dem Boden 120 getrennt. Als zweiter Schneidbereich der zweiten Schneidkante 106 wird derjenige Umfangsabschnitt des zweiten Schneidelements 105 bezeichnet, welcher in Pflügrichtung 110 als zweites Kontakt mit dem Boden 120 aufnimmt bzw. dem ersten Schneidelement 102 nachläuft und diesen schneidet. Der Doppelpfeil 12 in Figur 5a deutet an, dass das zweite Schneidelement 105 schwenkbar an der ersten, hier nicht gezeigten Trägerstruktur 5 gelagert ist. Die Schwenkung erlaubt die Einstellung des Anstellwinkels des Schneidmessers 6 in Bezug auf die Pflügrichtung 110 und damit die Eindringtiefe des Pflugmoduls 1 in den Boden 120.

Vor dem Pflugmodul 1 oder mit diesem verbunden kann ein rotierbares Scheibensechseck (nicht gezeigt) angeordnet sein, was den Boden 120 mit dem Schneidmesser 6 und dem ersten Schneidelement 102 vorschneidet bzw. öffnet. Hierdurch wird die für das Pflügen erforderliche Zugkraft vermindert, desgleichen der Verschleiß des Schneidmessers 6 und des nachfolgenden ersten Schneidelements 102. Das Schneidmesser 6 schneidet als Doppel- oder Dreifachschneide horizontal und vertikal und wirkt mit dem Anlageblech 8 nachlaufstabilisierend zusammen.

Das erste Schneidelement 102 wird rotiert, wenn sich die Pflügvorrichtung 3 entlang des Bodens 120 bewegt. Hierbei bewirken beispielsweise Reibungskräfte, dass das Schneidelement 102 bewegt wird. Das Schneidelement 102 ist dabei derart dimensioniert, dass während des Pflügens nur die untere Hälfte des ersten Schneidelements 102, welche sich unter dessen Drehachse befindet, in den Boden 120 eindringt, so dass Reibkräfte mit dem Boden 120 die Rotation induzieren. Die Rotation des ersten Schneidelements 102 bewirkt ferner, dass der abgetrennte Erdbalken angehoben wird.

Der abgetrennte Erdbalken ist in Reibkontakt mit einer Schneidfläche des Schneidelements 102. Die Schneidfläche ist diejenige Fläche des Schneidelements 102, welche innerhalb der ersten Schneidkante 103 ausgebildet ist bzw. von dieser umgeben wird. Ferner ist die Schneidfläche diejenige Fläche, welche zu dem abgetrennten Erdbalken gerichtet ist. Die Schneidfläche kann, wie in den Figuren 1 und 3 dargestellt, homogen ohne Aussparungen oder Erhebungen ausgebildet sein.

Aufgrund des Anhebens des Erdbalkens mittels des rotierenden Schneidelements 102 kann der Erdbalken energieeffizient in die benachbarte Furche befördert werden. Diese Furche wurde bei einem vorherigen Durchgang eines Pflugmoduls ausgehoben.

Gemäß Figur 1 sind das erste Schneidelement 102 und das zweite Schneidelement 105 dabei derart relativ zueinander an der Trägerstruktur 4, 5 befestigt, dass der Schneidbereich des ersten Schneidelements 102 in vertikaler Richtung beabstandet zu dem zweiten Schneidelement 105 ist bzw. über dem zweiten Schneidelement 105 liegt, wenn die Pflügvorrichtung 3 in Arbeitsstellung auf dem Boden 120 aufliegt bzw. in den Boden eindringt.

Das rotierende Schneidelement 102 und das zweite Schneidelement 105 wirken synergistisch zusammen. Einerseits wird mittels des zweiten Schneidelements 105 eine gewünschte Pflugtiefe konstant gehalten, da die abgeschnittenen Erdbalken mit einer definierten Drucckraft/Einzugskraft auf das zweite Schneidelement 105 über den eingestellten Anstellwinkel drücken und somit entgegen einem Auftrieb des rotierenden Schneidelements 102 wirken. Andererseits wird die energetisch vorteilhafte Wirkung des rotierenden Schneidelements 102 beim Schneiden der Erdbalken, insbesondere der Seitenflächen bzw. Seitenbereiche 122 der Erdbalken, ausgenutzt. Somit wird eine energieeffiziente Pflügvorrichtung 3 bereitgestellt, ohne die Qualität des Furchenbilds negativ zu beeinflussen. Zudem bewirkt das feststehende zweite Schneidelement 105, dass der abgeschnittene Erdbalken in Richtung des ersten Schneidelements 102 gedrückt wird, so dass eine Krümelung des abgeschnittenen Erdbalkens vorgenommen wird. Ferner wird aufgrund einer Seitenkraft, welche mittels des vorgelagerten zweiten Schneidelementes 105 in die erste Trägerstruktur 4 eingetragen wird, was insbesondere durch das Anlageblech 8 erreicht wird, dass einer auf das erste Schneidelement 102 während des Schneidens induzierten Seitenkraft entgegengewirkt wird, so dass eine einfachere und bessere Führung der Pflügvorrichtung 3 mit einer Zugmaschine, d.h. eine Nachlaufstabilisierung beim Pflügen, ermöglicht wird.

Das erste Schneidelement 102 und das zweite Schneidelement 105 sind derart zueinander an der ersten und der zweiten Trägerstruktur 4 und 5 angeordnet, dass der vordere Teil des Schneidelementes 105, d.h. dessen Schneidkante, in Pflügrichtung 110 mit einem Abstand x nach dem ersten Schneidbereich der ersten Schneidkante 103 des ersten Schneidelements 102 liegt. Somit trifft während des Pflügens zuerst das feststehende, zweite Schneidelement 105 den Erdbalken seitlich und schneidet ihn energieeffizient mit der zweiten Schneidkante 106 des zweiten Schneidelements 105 vom Restboden 120 ab. Nachfolgend schneidet das erste Schneidelement 105 mit der ersten Schneidkante 103 den Seitenbereich 122 eines Erdbalkens. Das zweite Schneidelement 105 unterschneidet dabei die mit dem ersten Schneidelement 102 geschnittene Furchenwand 122. Dadurch kann das nachfolgende Schneidelement 102 des nachfolgenden Pflugmoduls 1 den Erdbalken seitlich vertikal schneiden und wenden. Anschließend wird der Erdbalken durch die gewölbte Form der Hohlscheibe als erstem Schneidelement 102 und dessen schräge Orientierung zur Pflügrichtung 110 gedreht und in der danebenliegenden Furche abgelegt. Somit schneiden das erste Schneidelement 102 und das zweite Schneidelement 105 energieeffizient den Erdbalken ab, und sie werden gleichzeitig mit der auf das zweite Schneidelement 105 wirkenden Druckkraft in der gewünschten Schneidtiefe gehalten, wobei das Anlageblech 8 eine seitliche Abstützung an der Furchenwand 122 nachlaufstabilisierend für die Pflügvorrichtung 3 realisiert.

Das zweite Schneidelement 105 unterschneidet mit einem Bereich (Messerfläche) den Erdbalken. Ein weiterer Befestigungsbereich des zweiten Schneidelements 105, an welchem eine Befestigungsstange zur Befestigung mit der ersten Trägerstruktur 4 angeordnet ist, wird an der von dem ersten Schneidelement 102 abgewandten Seite an dem zweiten Schneidelement 105 ausgebildet. Somit verläuft die Befestigungsstange während des Pflügens in einer bereits bearbeiten Furche, was die Zugkraft der Pflügvorrichtung 3 reduziert.

Die Trägerstruktur 4, 5 ist derart ausgebildet, dass das erste Schneidelement 102 und/oder das zweite Schneidelement 105 entlang der Pflügrichtung 110 und/oder senkrecht, d. h. vertikal zur Pflügrichtung 110, relativ zueinander einstellbar sind. Beispielsweise können das erste Schneidelement 102 mittels Höhenverstellung 16, welche mittels Langlöcher der ersten Trägerstruktur 4 zusammenwirkt, an der Trägerstruktur 4 verschiebbar befestigt werden. Mittels der Einstellung der Abstände des Schneidelements 102, des zweiten Schneidelementes 105 und der Trägerstruktur 4, 5 entlang der Pflügrichtung 110 kann die Pflügvorrichtung 3 auf spezielle Bedingungen verschiedener Bodenarten eingestellt werden und effizienzoptimiert eingesetzt werden.

Ferner können die Elemente nachjustiert werden, falls sich die Elemente nach Benutzung der Pflügvorrichtung 3 verziehen.

Ferner kann die Trägerstruktur 4, 5 derart ausgebildet sein, dass das erste Schneidelement 102 entlang einer Richtungskomponente seiner Drehachse 108 und das zweite Schneidelement 105 entlang einer Richtungskomponente seiner Schneidmessererstreckung relativ zueinander einstellbar sind. Insbesondere kann ein Winkel zwischen der ersten Drehachse 108 und der Schneidmesserlängsachse eingestellt werden. Das erste Schneidelement 102 und das zweite Schneidelement 105 sind dabei derart relativ zueinander an der jeweiligen Trägerstruktur 4 oder 5 befestigt, dass ihre Schneidebenen nicht parallel ausgebildet sind und einen Winkel zueinander aufweisen. Beispielsweise ist ein Winkel zwischen der ersten Drehachse 108 und der Schneidmesserlängsachse kleiner als 90°, insbesondere zwischen 45° und 80°.

Figur 4 zeigt eine rückseitige Darstellung einer Anordnung gemäß Figur 3. Angedeutet ist dabei die zweite Trägerstruktur 5, welche für die Aufnahme der ersten Trägerstruktur 4 vorgesehen ist. An der mit der ersten Trägerstruktur 4 verbundenen zweiten Trägerstruktur 5 ist eine Weiteneinstellung 15 vorgesehen, mittels welcher der Abstand des ersten Schneidelementes 102 in Form der Hohlscheibe und des zweiten Schneidelementes 105 in Form eines angedeuteten Schneidmessers 6 einstellbar ist. Die unterschiedliche Weiteneinstellung 15 kann dabei über auswechselbare Distanzscheiben vorgenommen werden. Oberhalb des Schneidmessers 6 ist das Anlageblech 8 dargestellt, was für eine Anlage entlang der in Figur 4 nicht dargestellten Furchenwand 122 im Sinne einer Nachlaufstabilisierung der Pflügvorrichtung 3 vorgesehen ist.

Und schließlich sind in den Figuren 5a, 5b und 5c drei Teilansichten eines Pflugmoduls 1 gemäß der Erfindung dargestellt.

Figur 5b zeigt eine Rückansicht der Anordnung des zweiten Schneidelements 105 in Form eines Schneidmessers 6, bei welchem ein Anlageblech 8 zur Anlage an der Furchenwand 122 vorgesehen ist, wobei das zweite Schneidelement 105 sich von der dargestellten Ansicht nach hinten erstreckt. Um die Anordnung beider Schneidelemente 102 bzw. 105 innerhalb eines Pflugmoduls 1 deutlich zu machen, sind in der Darstellung gemäß Figur 5b sowohl links als auch rechts von dem zweiten Schneidelement 105 mit Anlageblech 8 jeweils eine Hohlscheibe 102 dargestellt. Die Rückseite des Anlagebleches 8 weist ein Verstärkungsblech 9 auf, welches dem Anlageblech 8 (siehe Figur 5c) eine größere Festigkeit und Stabilität verleiht. Eingezeichnet ist ein Gelenk 7, über welches das zweite Schneidelement 105 in Form des Schneidmessers 6 relativ zur ersten Trägerstruktur 4 hinsichtlich seines Anstellwinkels veränderbar einstellbar ist. Zusätzlich ist eine Höhenverstellung 13 eingezeichnet, mittels welcher die Schneidmesser-Trägerstruktur-Einheit höhenverstellbar bezüglich des Grundgerüstes bzw. Pflugbaumes 2 der Pflügvorrichtung 3 ist. Die Höhenverstellung 13 bezieht sich auf die Höheneinstellung des Schneidmessers 6. Darüber hinaus ist eine weitere Höhenverstellung für das erste Schneidelement 102 in Form einer Hohlscheibe vorgesehen.

Figur 5a stellt eine Ansicht des erfindungsgemäßen Pflugmoduls 1 von der rechten Seite der in Figur 5b dargestellten Rückansicht dar, wohingegen Figur 5c eine seitliche Ansicht der Rückansicht gemäß Figur 5b von links darstellt.

Die Schwenkbarkeit des zweiten Schneidelementes 105 in Form des Schneidmessers 6 um das Gelenk 7 ist in Figur 5a durch den Doppelpfeil 12 gekennzeichnet. Eine entsprechende Arretierung des eingestellten Anstellwinkels des Schneidmessers 6 erfolgt über eine Neigungsfixierung 11.

Die Seitenansicht 5c zu der Rückansicht gemäß Figur 5b von links zeigt, dass im Sinne einer Nachlaufstabilisierung das Anlageblech 8 an der in Figur 5c nicht dargestellten Furchenwand im Sinne eine Längsführung anliegt, wohingegen mit dem Schneidmesser 6 bereits in einer Tiefe im zu pflügenden Erdreich die Furchensohle 121 für den noch abzutrennenden Erdbalken, welcher mit der angedeuteten Hohlscheibe 102 abgetrennt und gewendet wird, geschnitten wird. Aufgrund der Tatsache, dass das Schneidmesser 6 das Anlageblech 8 durchdringt und in seiner Lage dort fixiert befestigt ist und ebenfalls über das Gelenk 7 zusammen mit dem Schneidmesser 6 verschwenkt werden kann, bedeutet, dass selbst bei verändertem Anstellwinkel das Anlageblech 8 immer zusammen mit dem Schneidmesser 6 mitverschwenkt wird.

### Bezugszeichenliste

- 1: Pflugmodul
- 2: Grundgerüst/Pflugbaum
- 3: Pflügvorrichtung
- 4: erste Trägerstruktur
- 5: zweite Trägerstruktur
- 6: Schneidmesser
- 7: Gelenk
- 8: Anlageblech
- 9: Verstärkungsblech
- 10: Aussparung
- 11: Neigungsfixierung
- 12: Doppelpfeil
- 13: Höhenverstellung Schneidmesser
- 14: Furche
- 15: Weiteneinstellung
- 16: Höhenverstellung Hohlscheibe
- 102: erstes Schneidelement, Hohlscheibe
- 103: erste Schneidkante
- 105: zweites Schneidelement
- 106: zweite Schneidkante
- 108: Drehachse erstes Schneidelement
- 110: Pflügrichtung
- 120: Boden
- 121: Trennfläche/Furchensohle/Bodenbereich
- 122: Seitenbereich/Furchenwand

## Patentansprüche

1. Pflugmodul (1) mit Pflugnachlaufstabilisierung zur auswechselbaren Montage an einem Grundgerüst (2) einer Pflügvorrichtung (3) zum Pflügen eines Bodens, wobei das Pflugmodul (1) aufweist:
- ein rotierbares, als Hohlscheiben-Schneidteller ausgebildetes erstes Schneidelement (102) mit einer umlaufenden ersten Schneidkante (103), wobei das erste Schneidelement (102) derart ausgebildet ist, dass durch Bewegen des Pflugmoduls (1) auf dem Boden (120) entlang einer Pflügrichtung (110) ein Seitenbereich (122) eines Erdbalkens des Bodens (120) schneidbar ist,
- ein zweites, ebenes Schneidelement (105) mit einer zweiten Schneidkante (106), wobei das zweite Schneidelement (105) derart ausgebildet ist, dass durch Bewegen des Pflugmoduls (1) auf dem Boden (120) entlang einer Pflügrichtung (110) ein Bodenbereich eines Erdbalkens des Bodens (120) abschneidbar ist,
**dadurch gekennzeichnet,**
**dass** das Pflugmodul (1) als fertig montierte Baueinheit ausgebildet ist, - bei welchem das als feststehendes Schneidmesser ausgebildete zweite Schneidelement (105) in Pflügrichtung (110) mit seiner Schneidkante dem ersten Schneidelement (102) nachläuft und
- eine erste Trägerstruktur (4), an der das erste Schneidelement (102) angeordnet ist,
- eine zweite Trägerstruktur (5), an der das zweite Schneidelement (105) angeordnet ist und die mit der ersten Trägerstruktur (4) verbunden ist, vorgesehen ist, und
- **dass** die erste Trägerstruktur (4) Mittel zur lösbaren Befestigung an einem Grundgerüst (2) einer Pflügvorrichtung (3) aufweist, wobei
- das Schneidmesser (6) derart nach hinten abgewinkelt ist, dass ein dynamisches Kräftegleichgewicht zwischen dem ersten Schneidelement (102) und dem Schneidmesser (6) im Sinne einer Pflugnachlaufstabilisierung erzielbar ist; und
- das Schneidmesser (6) mit einem zusätzlich vorgesehenen, sich an einer Furchenwand (122) pflugnachlaufstabilisierenden abstützenden Anlageblech (8) zusammenwirkt, von welcher Furchenwand (122) der Seitenbereich des Erdbalkens abgetrennt ist.

2. Pflugmodul nach Anspruch 1, **dadurch gekennzeichnet, dass** die zweite Trägerstruktur (5) über ein Gelenk (7) schwenkbar mit der ersten Trägerstruktur (4) verbunden ist.

3. Pflugmodul nach Anspruch 1 oder 2, **dadurch gekennzeichnet, dass** das erste Schneidelement (102) derart verschieblich an der ersten Trägerstruktur (4) angeordnet ist, dass der Abstand zwischen der ersten Schneidkante (103) des ersten Schneidelements (102) und der zweiten Schneidkante (106) des zweiten Schneidelements (105) einstellbar ist.

4. Pflugmodul (1) nach einem der Ansprüche 1 bis 3, wobei das erste Schneidelement (102) und zweite Schneidelement (105) derart zueinander angeordnet sind, dass ein Schneidbereich der ersten Schneidkante (103) des ersten Schneidelements (102) von der zweiten Schneidkante (106) des zweiten Schneidelements (105) vertikal beabstandet ist.

5. Pflugmodul (1) nach Anspruch 4, wobei der erste Schneidbereich innerhalb einer ersten Schneidebene und ein zweiter Schneidbereich in einer zweiten Schneidebene ausgebildet sind, wobei die erste Schneidebene und die zweite Schneidebene zueinander einen Winkel von 30° bis 135°, insbesondere 45° bis 110°, ausbilden.

6. Pflugmodul (1) nach einem der Ansprüche 1 bis 5, wobei das erste Schneidelement (102) bombiert, kegelförmig oder kegelstumpfförmig ausgebildet ist.

7. Pflugmodul (1) nach einem der Ansprüche 1 bis 6, wobei die erste Schneidkante (103) des ersten Schneidelements (102) am Umfang Aussparungen (10) aufweist.

8. Pflugmodul nach einem der Ansprüche 1 bis 7, **dadurch gekennzeichnet, dass** das Schneidmesser (6) des zweiten Schneidelements (105) L-förmig ausgebildet ist, wobei ein erster Balken des Schneidmessers (6) in Arbeitsstellung des Pflugmoduls (1) horizontal ausgerichtet ist und ein zweiter Balken im Wesentlichen senkrecht hierzu ausgerichtet ist.

9. Pflugmodul nach einem der Ansprüche 1 bis 8, **dadurch gekennzeichnet, dass** das Schneidmesser (6) einstückig ausgebildet ist.

10. Pflugmodul nach einem der Ansprüche 1 bis 9, **dadurch gekennzeichnet, dass** das Schneidmesser (6) mit dem Anlageblech (8) eine adjustierbare Furchenboden-Schneide-Führungs-Einheit bildet.

11. Pflugmodul nach Anspruch 10, **dadurch gekennzeichnet, dass** die Furchenboden-Schneide-Führungs-Einheit mittels einer als Lochplatten-Aufhängung ausgebildeten Höhenverstellung (13) tiefenverstellbar ist.

12. Pflugmodul nach einem der Ansprüche 1 bis 11, **dadurch gekennzeichnet, dass** das Schneidmesser (6) zur Einstellung der Einzugskraft einen über seine Drehachse (108) einstellbaren Anstellwinkel aufweist.

13. Pflugmodul nach einem der Ansprüche 1 bis 12, **dadurch gekennzeichnet, dass** das Schneidmesser (6) einen mittels Distanzscheiben einstellbaren Abstand zur Furchenwand (122) aufweist.

14. Pflügvorrichtung (3) mit einem Grundgerüst (2), **dadurch gekennzeichnet, dass** an ihrem Grundgerüst (2) mindestens ein Pflugmodul (1) mit Pflugnachlaufstabilisierung nach einem der voranstehenden Ansprüche 1 bis 13 angeordnet ist.

## Claims

1. A plow module (1) having plow-following stabilization for interchangeable mounting on a base frame (2) of a plow device (3) for plowing ground, wherein the plow module (1) comprises:
- a rotatable first cutting element (102) which is configured as a hollow disk cutting plate, with a circumferential first cutting edge (103), wherein the first cutting element (102) is configured such that a lateral region (122) of a soil ridge of the ground (120) can be cut away by moving the plow module (1) on the ground (120) in a plowing direction (110),
- a second planar cutting element (105) with a second cutting edge (106), wherein the second cutting element (105) is configured such that a base region of a soil ridge of the ground (120) can be cut away by moving the plow module (1) on the ground (120) in a plowing direction (110),
**characterized in that**
the plow module (1) is configured as a fully mounted structural unit - in which the second cutting element (105) which is configured as a fixed cutting blade follows the first cutting element (102) in the plowing direction (110) with its cutting edge and
- a first carrier structure (4) on which the first cutting element (102) is arranged,
- a second carrier structure (5) on which the second cutting element (105) is arranged and which is connected to the first carrier structure (4), is provided and
- the first carrier structure (4) has means for the releasable fastening to a base frame (2) of a plow device (3), wherein
- the cutting blade (6) is angled back to the rear such that a dynamic balance of forces can be achieved between the first cutting element (102) and the cutting blade (6) in the sense of a plow-following stabilization, and
- the cutting blade (6) cooperates with an additionally provided contact plate (8) which is supported on a furrow wall (122) such that a stabilizing effect follows the plow, the lateral region of the soil ridge being cut away from said furrow wall (122).

2. The plow module as claimed in claim 1, **characterized in that** the second carrier structure (5) is pivotably connected via a joint (7) to the first carrier structure (4).

3. The plow module s claimed in claim 1 or 2, **characterized in that** the first cutting element (102) is displaceably arranged on the first carrier structure (4) such that the spacing between the first cutting edge (103) of the first cutting element (102) and the second cutting edge (106) of the second cutting element (105) is adjustable.

4. The plow module (1) as claimed in one of claims 1 to 3, wherein the first cutting element (102) and second cutting element (105) are arranged relative to one another such that a cutting region of the first cutting edge (103) of the first cutting element (102) is vertically spaced apart from the second cutting edge (106) of the second cutting element (105).

5. The plow module (1) as claimed in claim 4, wherein the first cutting region is configured in a first cutting plane and a second cutting region is configured in a second cutting plane, wherein the first cutting plane and the second cutting plane form relative to one another an angle of 30° to 135°, in particular 45° to 110°.

6. The plow module (1) as claimed in one of claims 1 to 5, wherein the first cutting element (102) is configured to be cambered, conical or frustoconical.

7. The plow module (1) as claimed in one of claims 1 to 6, wherein the first cutting edge (103) of the first cutting element (102) has recesses (10) on the circumference.

8. The plow module as claimed in one of claims 1 to 7, **characterized in that** the cutting blade (6) of the second cutting element (105) is of L-shaped configuration, wherein a first bar of the cutting blade (6) is oriented horizontally in the working position of the plow module (1) and a second bar is oriented substantially perpendicularly thereto.

9. The plow module as claimed in one of claims 1 to 8, **characterized in that** the cutting blade (6) is configured in one piece.

10. The plow module as claimed in one of claims 1 to 9, **characterized in that** the cutting blade (6) forms with the contact plate (8) an adjustable furrow base-cutting edge-guide unit.

11. The plow module as claimed in claim 10, **characterized in that** the furrow base-cutting edge-guide unit is adjustable in terms of depth by means of a height adjustment device (13) configured as a perforated plate-suspension device.

12. The plow module as claimed in one of claims 1 to 11, **characterized in that** for adjusting the pull-in force the cutting blade (6) has an angle of attack which can be adjusted via its rotational axis (108).

13. The plow module as claimed in one of claims 1 to 12, **characterized in that** the cutting blade (6) has a spacing from the furrow wall (122) which can be adjusted by means of spacer washers.

14. A plow device (3) comprising a base frame (2), **characterized in that** at least one plow module (1) with plow-following stabilization is arranged on the base frame (2) thereof, as claimed in one of the preceding claims 1 to 13.

## Revendications

1. Module de charrue (1) à stabilisateur de chasse de charrue destiné à un montage échangeable sur un bâti de base (2) d'un dispositif de labourage (3) pour labourer un sol, le module de charrue (1) présentant :
- un premier élément de coupe (102) rotatif, réalisé sous la forme d'un plateau de coupe à disques creux, muni d'une première arête de coupe périphérique (103), dans lequel le premier élément de coupe (102) est réalisé de telle sorte qu'un mouvement du module de charrue (1) sur le sol (120) le long d'une direction de labour (110) permet de couper une zone latérale (122) d'une bande de labour du sol (120),
- un deuxième élément de coupe plan (105) muni d'une deuxième arête de coupe (106), dans lequel le deuxième élément de coupe (105) est réalisé de telle sorte qu'un mouvement du module de charrue (1) sur le sol (120) le long d'une direction de labour (110) permet de couper une zone de sol d'une bande de labour du sol (120),
**caractérisé en ce que** le module de charrue (1) est réalisé comme une unité modulaire entièrement assemblée, dans lequel le deuxième élément de coupe (105), réalisé sous la forme d'une lame de coupe fixe, suit le premier élément de coupe (102) avec son arête de coupe dans la direction de labour (110), et
- une première structure porteuse (4) sur laquelle est disposé le premier élément de coupe (102),
- une deuxième structure porteuse (5) est prévue sur laquelle est disposé le deuxième élément de coupe (105) et qui est reliée à la première structure porteuse (4), et
- **en ce que** la première structure porteuse (4) présente des moyens pour fixer de manière amovible un dispositif de labourage (3) à un bâti de base (2), dans lequel
- la lame de coupe (6) est coudée vers l'arrière de façon à pouvoir obtenir un équilibre de forces dynamique entre le premier élément de coupe (102) et la lame de coupe (6) en termes de stabilisation de chasse de charrue ; et
- la lame de coupe (6) coopère avec une tôle d'appui (8) prévue de plus qui prend appui sur un dos de sillon (122) en stabilisant la chasse de charrue, dos de sillon (122) dont la zone latérale de la bande de labour est séparée.

2. Module de charrue selon la revendication 1, **caractérisé en ce que** la deuxième structure porteuse (5) est reliée pivotante à la première structure porteuse (4) par l'intermédiaire d'un joint articulé (7).

3. Module de charrue selon la revendication 1 ou 2, **caractérisé en ce que** le premier élément de coupe (102) est disposé de manière mobile sur la première structure porteuse (4) de telle sorte que la distance entre la première arête de coupe (103) du premier élément de coupe (102) et la deuxième arête de coupe (106) du deuxième élément de coupe (105) est réglable.

4. Module de charrue (1) selon l'une quelconque des revendications 1 à 3, dans lequel le premier élément de coupe (102) et le deuxième élément de coupe (105) sont disposés l'un par rapport à l'autre de telle sorte qu'une zone de coupe de la première arête de coupe (103) du premier élément de coupe (102) est espacée verticalement par rapport à la deuxième arête de coupe (106) du deuxième élément de coupe (105).

5. Module de charrue (1) selon la revendication 4, dans lequel la première zone de coupe est réalisée à l'intérieur d'un premier plan de coupe, et une deuxième zone de coupe est réalisée dans un deuxième plan de coupe, dans lequel le premier plan de coupe et le deuxième plan de coupe forment l'un par rapport à l'autre un angle de 30° à 135°, en particulier de 45° à 110°.

6. Module de charrue (1) selon l'une quelconque des revendications 1 à 5, dans lequel le premier élément de coupe (102) est réalisé de manière bombée, conique ou tronconique.

7. Module de charrue (1) selon l'une quelconque des revendications 1 à 6, dans lequel la première arête de coupe (103) du premier élément de coupe (102) présente des évidements (10) sur la circonférence.

8. Module de charrue selon l'une quelconque des revendications 1 à 7, **caractérisé en ce que** la lame de coupe (6) du deuxième élément de coupe (105) est réalisée en forme de L, dans lequel, dans une position de travail du module de charrue (1), une première barre de la lame de coupe (6) est orientée horizontalement, et une deuxième barre est orientée de manière substantiellement verticale à celle-ci.

9. Module de charrue selon l'une quelconque des revendications 1 à 8, **caractérisé en ce que** la lame de coupe (6) est réalisée d'un seul tenant.

10. Module de charrue selon l'une quelconque des revendications 1 à 9, **caractérisé en ce que** la lame de coupe (6) forme avec la plaque d'appui (8) une unité de guidage et de coupe de fond de sillon ajustable.

11. Module de charrue selon la revendication 10, **caractérisé en ce que** l'unité de guidage et de coupe de fond de sillon est réglable en profondeur au moyen d'un réglage de hauteur (13) réalisé sous forme de suspension de plaque perforée.

12. Module de charrue selon l'une quelconque des revendications 1 à 11, **caractérisé en ce que** la lame de coupe (6) présente pour le réglage de la force de retrait un angle d'attaque réglable par l'intermédiaire de son axe de rotation (108).

13. Module de charrue selon l'une quelconque des revendications 1 à 12, **caractérisé en ce que** la lame de coupe (6) présente une distance par rapport au dos de sillon (122) réglable au moyen de cales.

14. Dispositif de labourage (3) comprenant un bâti de base (2), **caractérisé en ce qu'**au moins un module de charrue (1) à stabilisateur de chasse de charrue selon l'une quelconque des revendications précédentes 1 à 13 est disposé sur son bâti de base (2).
